# EUROPÄISCHE PATENTSCHRIFT

(11) **EP 1 134 245 B1**
(45) Veröffentlichungstag und Bekanntmachung des Hinweises auf die Patenterteilung: **06.10.2004**
(21) Anmeldenummer: 01104551.5
(22) Anmeldetag: 05.03.2001
(51) Int. Cl.: C08G 18/70, C09D 175/04

(54) **Klebstoffzubereitungen**
Adhesive compositions
Compositions d'adhésifs

(30) Priorität: 16.03.2000 DE 10012826
(43) Veröffentlichungstag der Anmeldung: 19.09.2001
(73) Patentinhaber: Bayer MaterialScience AG, 51368 Leverkusen (DE)
(72) Erfinder: Ganster, Otto, Dr., 51519 Odenthal (DE); Werner, Ralf, Dr., 41539 Dormagen (DE); Büchner, Jörg, 51467 Bergisch Gladbach (DE); Henning, Wolfgang, Dr., 51515 Kürten (DE)

(56) Entgegenhaltungen:
- EP-A- 0 204 970
- EP-A- 0 467 168
- WO-A-97/45475

## Beschreibung

Die vorliegende Erfindung betrifft Zubereitungen von Isocyanaten mit wässrigen isocyanatreaktiven Polymerdispersionen, Verfahren zu ihrer Herstellung und ihre Verwendung für Klebeverbindungen.

Bei den Isocyanaten handelt es sich um feinteilige Di- und Polyisocyanat-Pulver, die Zubereitungen werden zur Herstellung für bei Raumtemperatur vernetzende Klebeverbindungen verwendet.

Polyurethandispersionen, welche aufgrund ihrer linearen, bei Temperaturen unterhalb 100°, vorzugsweise bei T < 60°C kristallisierten Polymerkette für wärmeaktivierte Verklebungen verwendet werden, ergeben ohne zusätzliche Isocyanatvernetzung niedrige 1K-Wärmefestigkeiten. Deshalb werden sie üblicherweise unter Mitverwendung von flüssigen, in der wässrigen Dispersion emulgierbaren Polyisocyanaten, z. B. Desmodur® DA (Bayer AG), verarbeitet. Durch diese 2-komponentige (2K) Verarbeitung erreicht man deutlich bessere Wärmefestigkeitswerte. Beispielsweise ergibt Dispercoll® U 54 (Handelsübliche Polyurethandispersion für wärmeaktivierbare Klebstoffe, Bayer AG) ohne Isocyanatvernetzung bei Verklebung eines SBR-Gummis (SBR-Vulkanisat (Nora-Test), PFI - Prüf- und Forschungsinstitut für die Schuhindustrie - Pirmasens) einen Softening Point von ca. 65°C, vernetzt mit Desmodur® DA ergeben sich ca. 130°C. Jedoch wird dieser Gewinn erkauft durch einen höheren technischen Aufwand für die 2K-Verarbeitung, verbunden mit möglichen Fehlerquellen, die in der für jeden einzelnen Ansatz erforderlichen, separat herzustellenden, homogenen und bezüglich der Menge präzisen Eindispergierung des Vernetzerisocyanats bestehen.

Die Haltbarkeit dieser Mischungen reicht zwar für eine ungestörte Endverarbeitung des Klebstoffs im Verlauf eines Tages, aber sie reicht nicht für eine Einbeziehung dieses Vernetzers in die Klebstoff-Formulierung beim Klebstoffhersteller.

1K-Reaktionsmassen mit pulverförmigen Polyisocyanaten, in denen die Isocyanate ohne eine vorherige Oberflächendesaktivierung in die Formulierung eingearbeitet werden, sind schon lange bekannnt. DE-A 1 570 548 beschreibt lagerfähige, wärmehärtbare Polyurethanmassen mit pulverisierten, nicht oberflächendesaktivierten Uretdionisocyanaten. Sie sind bei RT mehrere Wochen bis einige Monate lagerfähig und müssen durch 30-90 Minuten andauerndes Erhitzen auf Temperaturen von 100-160°C ausgehärtet werden. Diese Veröffentlichung nimmt jedoch keinen Bezug auf die Verwendung pulverförmiger, nicht desaktivierter Feststoffisocyanate in wässrigen Polymerdispersionen.

EP-A 0 467 168 beansprucht Zubereitungen aus oberflächendesaktivierten wässrigen Polyisocyanat-Feststoffsuspensionen und NCO-reaktive Gruppen tragenden Polymerdispersionen für flexible Beschichtungen textiler Substrate. Die Zubereitungen besitzen eine lange Lagerfähigkeit. Die Beschichtungen werden gleichzeitig mit dem Trocknen in der Wärme nachvernetzt. Die Zubereitung wird durch Mischen der Polymerdispersion mit der Dispersion des oberflächendesaktivierten Polyisocyanats hergestellt. Die Dispergierung und Oberflächendesaktivierung des Polyisocyanats sind dabei nach EP-A 0 204 970 ein separater Arbeitsgang vor der Einarbeitung in die Polymerdispersion.

EP-A 0 922 720 beschreibt die Verwendung wässriger Dispersionen, die wenigstens ein oberflächendeaktiviertes festes Polyisocyanat und wenigstens ein mit Isocyanat reaktives Polymer enthalten zur Herstellung bei Raumtemperatur lagerstabiler, latenreaktiver Schichten oder Pulver, die durch Erwärmung zur Vernetzung gebracht werden. Die Herstellung der Polyisocyanat-Dispersion und die Oberflächendesaktivierung erfolgen ebenfalls nach EP-A 0 204 970 als separater Arbeitsgang vor der Einarbeitung in die Dispersion. Die Desaktivierung des Isocyanats könnte zwar zu einer relativ guten Lagerfähigkeit des getrockneten Polymerfilms führen, aber dafür ist der zusätzliche Arbeitsgang in Kauf zu nehmen.

Die Suche nach in der Endverarbeitung einkomponentigen, d.h. ohne weitere Vernetzungsmittelzusätze verarbeitbaren wässrigen Dispersionsklebstoff-Systemen, welche nach Applikation ohne zusätzliche Maßnahmen zu wärmebeständigen Klebungen vernetzen, ist seit langer Zeit ein intensiv bearbeitetes Gebiet.

Der vorliegenden Erfindung lag daher die Aufgabe zugrunde, dem Klebstoffverarbeiter einen einkomponentig einsetzbaren, ohne Topfzeitprobleme und ohne besondere Nachbehandlung selbstvernetzenden Klebstoff zur Verfügung zu stellen.

Diese Aufgabe wird durch die erfindungsgemäßen lagerstabilen Zubereitungen feinteiliger Di- und Polyisocyanat-Pulver mit wässrigen isocyanatreaktiven Polymerdispersionen, Verfahren zu ihrer Herstellung und ihre Verwendung für bereits bei Raumtemperatur vernetzende Klebeverbindungen gelöst.

Die Herstellung der erfindungsgemäßen lagerstabilen Zubereitungen erfolgt durch Mischen feinteiliger Di- und Polyisocyanat-Pulver oder entsprechender Pasten in inerten Trägerflüssigkeiten mit wässrigen isocyanatreaktiven Polyurethandispersionen.

Eine herausragende Eigenschaft der erfindungsgemäßen Zubereitungen resultiert daraus, dass entgegen der bekannten Arbeitsweise die feinteiligen festen Polyisocyanate direkt, also ohne Desaktivierung oder Verkapselung, in die wässrigen Dispersionen eingemischt wurden (siehe Beispiele, Punkt 1). Man erhält überraschenderweise Zubereitungen, die entgegen der Ansicht des Fachmannes auf diesem Gebiet bei den üblichen Lagertemperaturen von 20° - 30°C ohne wesentliche Verluste im Isocyanatgehalt gelagert werden können (siehe Beispiele, Punkt 2).

Die mit solchen Zubereitungen hergestellten Klebeverbindungen vernetzen selbst bei Raumtemperatur im Verlauf mehrerer Tage auch dann, wenn keine zusätzliche Temperung durchgeführt wird - im Gegensatz zu den Beispielen in EP-A 0 922 720, wo bei Verwendung eines desaktivierten Feststoffisocyanat zur Vernetzung ein zusätzlicher Temperschritt bei erhöhter Temperatur erforderlich ist (siehe (Beispiele, Punkte 3.1. und 3.2.). Ebenfalls im Gegensatz zu EP-A 0 922 720 sind keine Katalysatoren für die Beschleunigung der Reaktion der Isocyanate erforderlich. Insbesondere in Polyurethandispersionen, welche im allgemeinen Polyesterpolyole als Basisrohstoffe enthalten, wäre die Verwendung von Metallkatalysatoren im Hinblick auf die Hydrolysenbeständigkeit der Polymerkette sehr nachteilig.

Die Vernetzung mit den erfindungsgemäßen Zubereitungen führt unter anderem zu einer erheblich erhöhten Erweichungstemperatur und Hydrolysenbeständigkeit der Klebung. Darüber hinauf werden im Vergleich zu flüssigen Vernetzerisocyanaten (Desmodur® DA) sowie insbesondere auch im Vergleich zu desaktivierten Feststoffisocyanaten deutlich auf Weich-PVC im Schälversuch deutlich erhöhte Festigkeiten gefunden.

Von besonderer Bedeutung ist, dass bei Verwendung auf Basis kristallisierender Polymerketten hergestellter Polyurethandispersionen die Klebfilme vor der bei solchen Polymeren erforderlichen wärmeaktivierten Verklebung - das heißt Verklebung durch Dekristallisation der Polymerkette - einige Tage oder Wochen lang bei RT gelagert werden können, ohne dass die Wärmeaktivierbarkeit durch eine beginnende Vernetzung beeinträchtigt wird. Nach Durchführung der wärmeaktivierten Verklebung unter Verwendung der richtigen Aktivierbedingungen (siehe Beispiele, Punkt 3.1.1) läuft jedoch die Vernetzungsreaktion innerhalb einiger Tage bei Raumtemperatur problemlos ab.

Durch den Einsatz der erfindungsgemäßen Zubereitungen von nicht-desaktivierten Feststoffisocyanaten in Polymerdispersionen wird also der zusätzliche Aufwand für die Temperung der Verklebung sowie die Gefahr der Hydrolyse der Polymerkette durch ggf. zu verwendende Katalysatoren vermieden.

Die erfindungsgemäßen Zubereitungen weisen gegenüber den in EP-A 0 922 720 beschriebenen zwar eine verminderte Lagerbeständigkeit des getrockneten Klebfilms auf. Dies stellt jedoch kein anwendungstechnisch relevantes Problem dar, denn die Zeitspanne bis zum Eintritt einer die Verklebbarkeit behindernden Vernetzung ist auch ohne Desaktivierung der Polyisocyanatoberfläche immer noch völlig ausreichend (siehe Beispiele, Pkt. 4.1 und 4.2).

Zur Herstellung der erfindungsgemäßen Zubereitungen wird das pulverförmige, ggf. z. B. durch Sieben auf die gewünschte Korngrößengrenze eingestellten Polyisocyanat in die Polymerdispersion eingemischt. Zur Vereinfachung des Mahlvorgangs und zur Vermeidung einer Staubbildung kann das Pulver in einer inerten Trägerflüssigkeit angepastet sein. Das Verfahren vereinfacht die bisherigen, weil auf die separate Herstellung einer Dispersion des "desaktivierten" Feststoffisocyanats verzichtet wird. Insbesondere wird auch der auf die kolloidchemische Stablität sich negativ auswirkende Überschuß des Hüllamins in der Dispersion des desaktivierten Feststoffisocyanats vermieden. Der Überschuß des Hüllamins wäre dort durch Abfiltrieren des desaktivierten Feststoffs von der wässrigen Phase zu beseitigen. Dieser aufwendige Fertigungsschritt wird bei der erfindungsgemäßen Verwendung der nicht-desaktivierten Feststoffisocyanate nicht benötigt.

Die Herstellung erfolgt gegebenenfalls unter Mitverwendung von Zusätzen wie Schutzkolloiden, Emulgatoren, Verdickern, Lösungsmitteln, Weichmachern, Pigmenten, Füllstoffen, Farbstoffen und anderen für die Herstellung von Dispersionsklebstoffen oder Beschichtungen üblichen Hilfsstoffen.

Die Polyisocyanate weisen vorzugsweise Schmelz- bzw. Erweichungstemperaturen von > 30°C und werden als feinteilige Pulver oder als Pasten in inerten Trägerflüssigkeiten mit einem mittleren Teilchendurchmesser von im wesentlichen unter 100 µm, bevorzugt < 50 µm, in die wässrigen Dispersionen eingemischt.

Die Viskosität der Dispersionen bei 23°C wird auf mindestens 500, bevorzugt auf mindestens 2000 mPas eingestellt.

Bevorzugte Polymerdispersionen sind isocyanatreaktive Polyurethan- bzw. Polyharnstoffdispersionen sowie Polymerisate des 2-Chlorbutadiens.

Besonders bevorzugt sind Dispersionen isocyanatreaktiver Polyurethane, die aus kristallisierten Polymerketten aufgebaut sind, welche bei Messung mittels thermomechanischer Analyse bei Temperaturen <+110°C, bevorzugt bei Temperaturen < +90°C und besonders bevorzugt bei Temperaturen < +65°C zumindest partiell dekristallisieren.

Als bevorzugte Polyisocyanate werden Dimerisierungsprodukte, Trimerisierungsprodukte und Harnstoff-Derivate des TDI bzw. IPDI verwendet.

Vorzugsweise werden die erfindungsgemäßen Dispersionen für die Herstellung von Beschichtungen oder Klebeverbindungen, welche nach Trocknung ohne zusätzliche Wärmezufuhr im Verlauf einiger Tage vernetzen, eingesetzt. Diese besitzen eine deutlich verbesserte Erweichungstemperatur, Wasser- und Lösemittelfestigkeit.

Zur Herstellung derartiger Klebeverbindungen wird der auf dem zu verklebenden Substrat getrocknete Klebstoffauftrag durch kurzzeitiges Erwärmen, vorzugsweise auf T < +110°C dekristallisiert und im dekristallisierten Zustand gefügt.

Hierzu kann auch der Klebstoffauftrag auf einem Substrat getrocknet und dann mit einem durch Erwärmung plastisch erweichten Folienmaterial verpreßt werden, sodass die Folie im Kontakt mit dem Klebefilm eine Temperatur oberhalb der Dekristallisationstemperatur des Polymers im Klebfilm wie vorstehend beschrieben annimmt.

### Beispiele

### 1. Herstellung der Zubereitung aus Polymer-Dispersion und TDI-Dimer (Desmodur® TT)

100 g einer handelsüblichen Polyurethandispersion (Dispercoll® U 54, Bayer AG, DE) werden durch Zugabe von Borchigel® L 75 (Borchers GmbH, DE) auf eine Viskosität von ca. 3000 mPas (23°C) eingestellt. 5g eines pulverisierten Desmodur® TT (Rhein Chemie, DE), Teilchengröße: < 63 µm; NCO-Gehalt: 24,0%; Fp.: 156°C) werden unter Verwendung eines Ultraturrax bei 9500 Upm (2,5 Minuten) eindispergiert. Es entsteht eine koagulatfreie Mischung mit einem sofort gemessenen NCO-Gehalt von 1,3%.

### 2. Lagerstabilität des Isocyanat-Gehalts in der Zubereitung aus Desmodur® TT und Dispercoll® U 54

In der frisch hergestellten sowie in der über einen Zeitraum von bis zu 3 Monaten bei 23°C gelagerten flüssigen Mischung wird der Isocyanatgehalt bestimmt. Man erkennt in der folgenden Tabelle, dass der Gehalt an reaktiven Isocyanatgruppen über drei Monate weitgehend unverändert bleibt.

| **Lagerzeit der Zubereitung** | **NCO-Gehalt (%)*** | **Viskosität bei 23 °C (η)** |
|---|---|---|
| Sofort | 1,3 | 3000 |
| 24h | 1,3 | 2700 |
| 1 Woche | 1,1 | 2700 |
| 2 Wochen | 1,1 | 3200 |
| 4 Wochen | 1,2 | 3500 |
| 8 Wochen | 1,2 | 3700 |
| 12 Wochen | 1,2 | 4100 |

| | | |
|---|---|---|
| * Die Proben wurden zur Vermeidung von Inhomogenitäten durch Sedimentation vor der NCO-Bestimmung aufgeschüttelt. | | |

### 3. Einfluß der Lagerung der flüssigen Klebstoffzubereitung auf die Klebei genschaften nach Verklebung durch Wärmeaktivierung

### 3.1 Bestimmung der Wärmefestigkeit (Softening Point = Scherbelastung) nach Schockaktivierung.

### Herstellung der Proben:

Die Prüfkörper aus Nora-Gummi (SBR) bzw. Weich-PVC (30% DOP) werden unmittelbar vor dem Klebstoffauftrag mit Schleifpapier (Körnung = 80) angerauht. Die Klebstofformulierung wird mit einem Pinsel beidseitig auf die 20 x 10 mm große Klebefläche aufgetragen. Die Klebstoffschicht wird 60 min. bei 23°C/50 % rel. Feuchte getrocknet.

### Schockaktivierung:

Die Klebeflächen werden 3, 5 bzw. 10 Sekunden mit einem IR-Strahler der Fa. Funk (Schockaktiviergerät 2000) bestrahlt. Dabei erwärmt sich der Klebefilm auf dem Nora-Gummi je nach Aktivierdauer auf 49°C, 65°C bzw. 115°C. Eine 10 Sekunden-Aktivierung des Klebfilms auf der Weich-PVC-Probe ergibt eine Oberflächentemperatur von 92°C. Die Dekristallisationstemperatur der Polymerkette der verwendeten Polyurethandispersion (Dispercoll U 54) liegt bei 55°C, welche bei einer Aktivierdauer von 5 bzw. 10 Sekunden überschritten wird. Die Verklebung erfolgt sofort nach Wärmeaktivierung der Klebstoff-beschichteten Prüfkörper, indem die aktivierten Klebeschichten gegeneinandergelegt und in einer Presse eine Minute lang bei 4 bar verpresst werden. Die so hergestellten Prüfkörper werden 7 Tage bei 23°C und 50% rel. Feuchte gelagert.

### Wärmeprüfung:

Die Prüfkörper werden mit 4 kg belastet und in einem Heizschrank innerhalb von 30 min. auf 40°C temperiert. Anschließend werden die Prüfkörper mit einer linearen Heizrate von 0,5°C/min. auf 150°C aufgeheizt. Die Erweichungstemperatur, d.h. die Temperatur in °C bei der die Klebung unter der 4 kg Last versagt, wird registriert. Es werden jeweils 5 Einzelmessungen durchgeführt.

### 3.1.1. Ergebnisse auf SBR (NORA-Gummi)

| **Lagerzeit der Zubereitung** | **Aktivierbedingungen** | | |
|---|---|---|---|
| | **3" (49°C)** | **5" (65°C)** | **10" (105°C)** |
| | **Erweichung (°C)** | | |
| Sofort | 69 | 107 | 138 |
| 1 Woche | 69 | 107 | 136 |
| 2 Wochen | 66 | 92 | 141 |
| 3 Wochen | 63 | 72 | 135 |
| 4 Wochen | 61 | 69 | 139 |
| 5 Wochen | 59 | 63 | 129 |

### 3.1.2. Ergebnisse: Weich-PVC

### 10" Schockaktivierung entsprechend einer Oberflächentemperatur des Kleb films von 92°C.

| **Lagerzeit der Zubereitung** | **Erweichung (°C)*** |
|---|---|
| Sofort | 111 |
| 1 Woche | 113 |
| 5 Wochen | 110 |
| 8 Wochen | 102 |

| | |
|---|---|
| * Dispercoll® U 54 ergibt bei gleicher Verklebung ohne Vernetzung eine Erweichungstemperatur von ca. 65 °C. | |

### 3.2. Wärmeschälfestigkeit nach Verklebung im Heißpreßverfahren (Buchenholz/Hart-PVC)

### Herstellung der Prüfkörper:

Die nach 1. hergestellte Zubereitung aus Dispercoll® U 54 und Desmodur® TT wird auf eine gehobelte Buchenholzplatte (nach DIN 53-254, Abmessungen: 50 x 140 x 4 mm) unter Verwendung eines Pinsels aufgetragen. Der Klebstoffauftrag erfolgt nur auf eine Seite des Buchenholzprüfkörpers. Die Klebfläche beträgt 50 x 110 mm. Nach einer Trocknungszeit von 30 Minuten bei Umgebungstemperatur wird eine zweite Klebstoffschicht über die erste aufgetragen und anschließend 60 Minuten bei Umgebungstemperatur getrocknet. Nach der Trocknungszeit wird mit der nicht strukturierten Seite einer Hart-PVC-Kaschierfolie (Typ: Benelitfolie RTF, Abmessungen: 50 x 210 x 0,4) in einer Membranpresse 10 Sekunden bei 4 bar eff. Druck und einer Fugentemperatur von 90°C gepreßt.

### Bestimmung des Wärmestandes

Die gefügten Probekörper werden 3 Tage bei Raumtemperatur gelagert. Der Wärmestand wird in einem Universal Wärmeschrank mit automatischer Temperaturregelung bestimmt. Dazu wird das nicht verklebte Ende des Buchenholzprüfkörpers oben an einer Halterung mit einer Flügelschraube befestigt. Das überstehende Ende des PVC-Prüfstreifens wird im 180° Winkel senkrecht nach unten mit einem 500 g Gewicht belastet. Die Starttemperatur beträgt 50°C. Jeweils nach 1 Stunde wird die Temperatur automatisch um 10°C erhöht bis es zur vollständigen Ablösung (bzw. zum Abriß) des PVC-Streifens vom Holzprüfkörper kommt.

| **Ergebnisse (Doppelbestimmung)** | |
|---|---|
| **Lagerzeit der Zubereitung** | **Wärmestand* °C** |
| Sofort | > 120 (Folienriß) |
| | > 120 |
| 1 Woche | > 120 |
| | > 120 (Folienriß) |
| 5 Wochen | >120 |
| | 5 Minuten 120° |
| 8 Wochen | 10 Minuten 120° |
| | > 120 |
| 9 Wochen | > 120 |

| | |
|---|---|
| * Wärmestand der Verklebung mit Dispercoll U 54 unvernetzt: ca. 85°C | |

### 3.3. Schlußfolgerungen zu: Einfluß der Lagerung der flüssigen Klebstoffzu bereitung auf die Klebeigenschaften nach Wärmeaktivierung

Alle oben durchgeführten Versuche belegen, dass
I. auch nach langer Lagerzeit der Zubereitung des erfindungsgemäß nicht desaktivierten Feststoffisocyanats nach der Verklebung eine Vernetzung des Klebstoffpolymers stattfindet (siehe Tabellen in 3.1.1, 3.1.2 und 3.2),
II. dass zur Auslösung der Vernetzung (im Gegensatz zur Beschreibung in EP-A 0 922 720) weder eine Temperung noch ein Katalysator benötigt wird, und
III. dass statt dessen die Vernetzung durch die sehr kurzzeitige Infrarotbestrahlung der Klebeschicht ausgelöst wird, welche die zur Verklebung ohnehin nötige Dekristallisation des Polymers bewirkt (siehe Tabelle in 3.1.1 und vergleiche Meßwerte bei 3" Aktivierung (49°C) mit den Werten bei 5" (65°C) bzw. 10" (105°C). die Dekristallisationstemperatur der verwendeten Polyurethandispersion liegt bei 55°C).
IV. Wird die zur Dekristallisation der Polymerkette erforderliche Temperatur nicht überschritten, erfolgt keine Verbesserung der Erweichungstemperatur der Klebung (siehe Tabelle 3.1.1).
V. Außerdem belegt der Vergleich, dass die Vernetzung in den Prüfkörpern wirklich durch die Wärme-aktivierte Verklebung und nicht durch die Wärme der im Temperaturbereich 40-150°C laufenden Wärmebeständigkeitsprüfung ausgelöst wird. Es handelt sich also nicht umein durch die Prüfbedingungen verursachtes Ergebnis. Würde nämlich die Vernetzung durch die während der Prüfung einwirkende Wärme ausgelöst, dann hätten alle Ergebnisse unabhängig von den Aktivierbedingungen ausfallen müssen.

### 4. Einfluß der Lagerdauer des Klebefilms auf die Vernetzung nach Verkle bung durch Wärmeaktivierung

Der auf dem Substrat (SBR-Gummi) aufgetragenen Klebfilms auf den Softening Point (Scherbelastung) bei Verklebung durch Wärmeaktivierung.

Die nach 1. hergestellte, frische Zubereitung wird auf Prüfkörper aus Nora-Gummi aufgetragen und bei Raumtemperatur getrocknet. Nach 1, 2, 3, 4, 8 und 12 Wochen Lagerung der beschichteten Substrate (offen im Klimaraum bei 23°C ) erfolgt die Verklebung gemäß der Beschreibung unter 3.1 nach 10" Wärmeaktivierung. Die Prüfung ergibt die folgenden Erweichungstemperaturen (Softening Points):

| **offene Lagerdauer der beschichteten Proben** | **Softening Point (°C)** |
|---|---|
| 1 Woche | 134 |
| 2 Wochen | 113 |
| 3 Wochen | 91 |
| 4 Wochen | 85 |
| 8 Wochen | 71 |

Aus diesem Ergebnis folgt, dass die erfindungsgemäß - im Gegensatz zu EP-A 0 922 720 - das nicht desaktivierte Feststoff-Isocyanat enthaltenden Klebfilme über den Verlauf von 2 Wochen ohne Nachteil für die Vernetzbarkeit gelagert werden können. Diese verfügbare Zeit ist für die üblichen Anforderungen bei der industriellen Verarbeitung des Klebstoffs völlig ausreichend und erlaubt auch eine begrenzte Zwischenlagerung vorbeschichteter SBR-Gummi-Flächen.

### 4.2. Einfluß der Lagerdauer des Klebfilms auf die Wärmeschälfestigkeit bei Verklebung durch Heißverpressen (Substrat Hart-PVC/Buchenholz).

Die nach 1. hergestellte, frische Zubereitung wird auf die Prüfkörper aus gehobeltem Buchenholz aufgetragen und bei Raumtemperatur getrocknet. Nach 1, 2, 3, 4, 8 und 12 Wochen Lagerung der beschichteten Substrate (offen im Klimaraum bei 23°C) erfolgt die Verklebung und Prüfung gemäß der Beschreibung unter 3.2 durch Heißverpressen bei einer Fugentemperatur von 90°C .

| **Ergebnisse:** | |
|---|---|
| **Offene Lagerdauer der beschichteten Proben** | **Wärmestand*** °C |
| sofort | > 120 |
| 1 Woche | > 120 |
| 2 Wochen | > 120 |
| 4 Wochen | > 120 |
| 9 Wochen | > 120 |

| | |
|---|---|
| *: Wärmestand der Verklebung mit Dispercoll® U 54 unvernetzt: ca. 85°C | |

Wie aus 4.1. folgt aus diesem Ergebnis ebenfalls, dass die Lagerfähigkeit der erfindungsgemäßen Zubereitung trotz des nicht-desaktivierten Feststoff-Isocyanats auch über längere Zeit eine Verklebung erlaubt, ohne dass bei den dort geltenden Anforderungen über 9 Wochen eine Verringerung der Vernetzbarkeit sichtbar wird.

## Patentansprüche

1. Wässrige Dispersionen isocyanatreaktiver Polymere, **dadurch gekennzeichnet, dass** sie Di- und/oder Polyisocyanate mit Schmelz- bzw. Erweichungstemperaturen von > 30°C als feinteilige Pulver mit einem mittleren Teilchendurchmesser von im wesentlichen unter 100 µm enthalten.

2. Wässrige Dispersionen gemäß Anspruch 1, **dadurch gekennzeichnet, dass** sie Di- und/oder Polyisocyanate mit Schmelz- bzw. Erweichungstemperaturen von > 30°C als feinteilige Pulver mit einem mittleren Teilchendurchmesser von im wesentlichen unter 50 µm enthalten

3. Wässrige Dispersionen gemäß Ansprüchen 1 und 2, **dadurch gekennzeichnet, dass** sie bei 23°C eine Viskosität von mindestens 500 mPas, aufweisen.

4. Wässrige Dispersionen gemäß Ansprüchen 1 und 2, **dadurch gekennzeichnet, dass** sie bei 23°C eine Viskosität von mindestens 2000 mPas aufweisen.

5. Wässrige Dispersionen gemäß Ansprüchen 1 bis 4, **dadurch gekennzeichnet, dass** als isocyanatreaktive Polymere Polyurethane verwendet werden, die aus kristallisierten Polymerketten aufgebaut sind, welche bei Messung mittels thennomechanischer Analyse bei Temperaturen < +110°C zumindest partiell dekristallisieren.

6. Wässrige Dispersionen gemäß Anspruch 5, **dadurch gekennzeichnet, dass** die Dekristallisationstemperatur < +90 °C beträgt.

7. Wässrige Dispersionen gemäß Anspruch 5, **dadurch gekennzeichnet, dass** die Dekristallisationstemperatur < +65°C beträgt.

8. Wässrige Dispersionen gemäß Ansprüchen 1 bis 7, **dadurch gekennzeichnet, dass** als isocyanatreaktive Polymer-Dispersionen Polymerisate und Copolymerisate des 2-Chlorbutadiens verwendet werden.

9. Wässrige Dispersionen gemäß Ansprüchen 1 bis 7, **dadurch gekennzeichnet, dass** als Polyisocyanate Dimerisierungsprodukte, Trimerisierungsprodukte und Harnstoff-Derivate des TDI bzw. IPDI verwendet werden.

10. Verwendung der wässrigen Dispersionen gemäß Ansprüchen 1 bis 9 zur Herstellung von Beschichtungen oder Klebeverbindungen.

11. Verwendung nach Anspruch 11 zur Herstellung von Klebeverbindungen, welche ohne nachträgliche Wärmebehandlung im Verlauf einiger Tage bei Raumtemperatur vernetzen.

12. Verfahren zur Herstellung einer Klebeverbindung, indem der auf dem zu verklebenden Substrat eine Dispersion gemäß Ansprüchen 1 bis 9 aufgetragen und anschließend getrocknet wird, und der getrocknete Klebstoffauftrag durch kurzzeitiges Erwärmen auf Temperaturen < +110°C dekristallisiert und im dekristallisierten Zustand mit dem zu verbindenden Substrat gefügt wird.

13. Verfahren nach Anspruch 12, **dadurch gekennzeichnet, dass** es sich bei dem zu verbindenden Substrat um ein durch Erwärmung plastisch erweichtes Folienmaterial handelt.

14. Verfahren nach Ansprüchen 12 und 13, **dadurch gekennzeichnet, dass** die Folie im Kontakt mit dem Klebefilm eine Temperatur oberhalb der Dekristallisationstemperatur des Polymers im Klebfilm hat.

## Claims

1. Aqueous dispersions of isocyanate-reactive polymers, **characterised in that** they contain di- and/or poly-isocyanates having melting or softening points of > 30°C in the form of finely divided powders having a mean particle diameter of substantially less than 100 µm.

2. Aqueous dispersions according to claim 1, **characterised in that** they contain di- and/or polyisocyanates having melting or softening points of > 30°C in the form of finely divided powders having a mean particle diameter of substantially less than 50 µm.

3. Aqueous dispersions according to claims 1 and 2, **characterised in that** they have a viscosity of at least 500 mPas at 23°C.

4. Aqueous dispersions according to claims 1 and 2, **characterised in that** they have a viscosity of at least 2000 mPas at 23°C.

5. Aqueous dispersions according to claims 1 to 4, **characterised in that** there are used as the isocyanate-reactive polymers polyurethanes which are composed of crystallised polymer chains which, on measurement by means of thermomechanical analysis, decrystallise at least partially at temperatures < +110°C.

6. Aqueous dispersions according to claim 5, **characterised in that** the decrystallisation temperature is < +90°C.

7. Aqueous dispersions according to claim 5, **characterised in that** the decrystallisation temperature is < +65°C.

8. Aqueous dispersions according to claims 1 to 7, **characterised in that** polymers and copolymers of 2-chlorobutadiene are used as the isocyanate-reactive polymer dispersions.

9. Aqueous dispersions according to claims 1 to 7, **characterised in that** dimerisation products, trimerisation products and urea derivatives of TDI or IPDI are used as the polyisocyanates.

10. Use of the aqueous dispersions according to claims 1 to 9 in the production of coatings or adhesive bonds.

11. Use according to claim 11 in the preparation of adhesive bonds that crosslink in the course of several days at room temperature without subsequent heat treatment.

12. Process for the production of an adhesive bond, wherein a dispersion according to claims 1 to 9 is applied to the substrate to be bonded and then dried, and the dried adhesive layer is decrystallised by heating for a short time at temperatures < +110°C and is joined in the decrystallised state to the substrate to be connected.

13. Process according to claim 12, **characterised in that** the substrate to be connected is a foil material softened plastically by heating.

14. Process according to claims 12 and 13, **characterised in that** the foil in contact with the adhesive film has a temperature above the decrystallisation temperature of the polymer in the adhesive film.

## Revendications

1. Dispersions aqueuses de polymères réactifs avec les isocyanates, **caractérisées en ce qu'**elles contiennent des di- et/ou polyisocyanates ayant des températures de fusion ou de ramollissement supérieures à 30°C à l'état de poudre fine à un diamètre de particule moyen essentiellement inférieur à 100 µm.

2. Dispersions aqueuses selon la revendication 1, **caractérisées en ce qu'**elles contiennent des di- et/ou poly-isocyanates ayant des températures de fusion ou de ramollissement supérieures à 30°C à l'état de poudre fine à un diamètre de particule moyen essentiellement inférieur à 50 µm.

3. Dispersions aqueuses selon les revendications 1 et 2, **caractérisées en ce qu'**elles ont à 23°C une viscosité d'au moins 500 mPas.

4. Dispersions aqueuses selon les revendications 1 et 2, **caractérisées en ce qu'**elles ont à 23°C une viscosité d'au moins 2000 mPas.

5. Dispersions aqueuses selon les revendications 1 à 4, **caractérisées en ce qu'**elles contiennent en tant que polymères réactifs avec les isocyanates des polyuréthannes constitués de chaînes polymères cristallisées qui, à la mesure par analyse thermomécanique, décristallisent au moins en partie à des températures inférieures à 110°C.

6. Dispersions aqueuses selon la revendication 5, **caractérisées en ce que** la température de décristallisation est inférieure à 90°C.

7. Dispersions aqueuses selon la revendication 5, **caractérisées en ce que** la température de décristallisation est inférieure à 65°C.

8. Dispersions aqueuses selon les revendications 1 à 7, **caractérisées en ce que** les polymères réactifs avec les isocyanates des dispersions sont des polymères et copolymères du 2-chlorobutadiène.

9. Dispersions aqueuses selon les revendications 1 à 7, **caractérisées en ce que** les polyisocyanates utilisés sont des produits de dimérisation ou de trimérisation du TDI ou de l'IPDI ou des dérivés de ces isocyanates et de l'urée.

10. Utilisation des dispersions aqueuses selon les revendications 1 à 9 pour l'application de revêtements ou la réalisation de collages.

11. Utilisation selon la revendication 11 pour la réalisation de collages qui, sans traitement complémentaire à la chaleur, réticulent en quelques jours à température ambiante.

12. Procédé pour la réalisation d'un collage dans lequel on applique sur le substrat à coller une dispersion selon les revendications 1 à 9 et on les sèche, on décristallise la colle appliquée et séchée par un court chauffage à des températures inférieures à 110°C et on joint à l'état décristallisé avec le substrat à associer.

13. Procédé selon la revendication 12, **caractérisé en ce que** le substrat à associer est une matière en feuille qui subit un ramollissement plastique par chauffage.

14. Procédé selon les revendications 12 et 13, **caractérisé en ce que** la feuille en contact avec la pellicule de colle est à une température supérieure à la température de décristallisation du polymère.
